# EUROPEAN PATENT APPLICATION

(11) **EP 1 624 666 A1**
(43) Date of publication of application: **08.02.2006**
(21) Application number: 05254917.7
(22) Date of filing: 05.08.2005
(51) Int. Cl.: H04N 1/00

(54) **Image processing apparatus and control method thereof**

(30) Priority: 06.08.2004 JP 2004231429
(71) Applicant: CANON KABUSHIKI KAISHA, Ohta-ku, Tokyo (JP)
(72) Inventor: Kunori, Shiro, c/o Canon Kabushiki Kaisha, Tokyo (JP)
(74) Representative: Beresford, Keith Denis Lewis

(57) **Abstract**

An image processing apparatus and a control method thereof capable of, on calling and reproducing recorded past user operations, changing the operations and suitably alleviating trouble of setting up the user operations for the sake of performing a desired operation. An image processing apparatus includes the operating unit for accepting an input by a user, records input information inputted to the operating unit, and records stop information while recording the input information. And it registers the input information and the stop information as an operational flow.

## Description

### FIELD OF THE INVENTION

The present invention relates to an image processing apparatus for alleviating trouble of user operations, and in particular to the image processing apparatus and a control method thereof for exerting control to simplify a setup operation performed by a user on the image processing apparatus.

### BACKGROUND OF THE INVENTION

Along with advancement of functions of an image processing apparatus in recent years, operational procedures for a user have increased so that more complicated operations are required. There are two techniques proposed, if roughly divided, as methods of solving it. One is a technique of recording a set value set by an operation performed by the user and recreating (reproducing) only the set value (hereafter, referred to as a "set value call technique"). The other is a technique of recording all the operations performed by the user and recreating (reproducing) them (hereafter, referred to as a "setup operation call technique").

For instance, there is a known technique (refer to Japanese Patent Laid-Open No. 2002-323946 for instance), as a representative of the setup operation call technique, of recording the operations of the user and calling records thereof to re-create the recorded operations of the past exactly in the same manner (that is, the same operational contents and procedure).

However, the former set value call technique can only re-create the set values, and so it cannot create a series of the operational procedures performed by the user before inputting the set values as an arbitrary shortcut to the setup contents. Thus, to create the arbitrary shortcut, the latter setup operation call technique is required. In the case of using a conventional setup operation call technique, however, it only calls the recorded operations even though it can re-create the same operations as those performed by the user in the past. For that reason, it cannot implement a change of only some operations in the middle of the series of the operational procedures for instance. Therefore, even in the case where the setup contents to be re-created are the operations similar to the recorded operations, it is necessary to record again the same number of the user operational procedures as the setup contents to be re-created as in the case of completely different operations.

### SUMMARY OF THE INVENTION

The present invention has been proposed to solve the conventional problems, and is intended to allow, on calling and re-creating recorded past user operations, changing the operations and suitably alleviating trouble of setting up the user operations for the sake of performing a desired operation.

To solve the problems, the image processing apparatus according to the present invention is the one characterized by comprising:
an operating unit, adapted to accept an input by a user;
an input information recording unit, adapted to record input information inputted by the operating unit;
a stop information recording unit, adapted to record stop information while recording the input information; and
a registering unit, adapted to register an input information recorded by the input information recording unit and the stop information recorded by the stop information recording unit as operational flow information.

Furthermore, to solve the problems, the control method of an image processing apparatus according to the present invention is the one characterized by comprising:
an input information recording step of recording input information inputted by the operating unit, adapted to accept an input by a user;
a stop information recording step of recording stop information while recording the input information in the input information recording step; and
a registering step of registering the input information recorded in the input information recording step and the stop information recorded in the stop information recording step as operational flow information.

Other feature and advantages of the present invention will be apparent from the following description taken in conjunction with the accompanying drawings, in which like references characters designate the same or similar parts throughout the figures thereof.

### BRIEF DESCRIPTION OF THE DRAWINGS

The accompanying drawings, which are incorporates in and constitute a part of the specification, illustrate embodiments of the invention and, together with the description, serve to explain the principle of the invention.
FIG. 1 is a diagram schematically showing a hardware configuration of an image processing apparatus (copying machine) according to a first embodiment of the present invention;
FIG. 2 is a block diagram showing a detail configuration of a control unit 100 of the image processing apparatus (copying machine) according to the first embodiment shown in FIG. I;
FIG. 3 is an appearance diagram of an operating unit A3 shown in FIG. 2 of the image processing apparatus according to the first embodiment of the present invention;
FIG. 4 is a diagram showing an example of a customization screen displayed on a touch panel A9 of the copying machine according to the first embodiment;
FIG. 5 is a diagram for describing a setup area and a status area on the screen displayed during a recording mode according to the first embodiment;
FIG. 6 is a diagram showing an example of a screen display during the recording mode according to the first embodiment;
FIG. 7 is a diagram showing an example of the screen display during a pause mode according to the first embodiment;
FIG. 8 is a diagram showing an example of the screen display during a reproducing mode of the copying machine according to the first embodiment;
FIG. 9 is a diagram showing an example of the screen display during a confirmation mode of the copying machine according to the first embodiment;
FIGS. 10A to 10F are diagrams for describing a screen flow for setting up "4 in 1.";
FIG. 11 is a flowchart for describing a procedure for registering an operational flow according to the first embodiment;
FIG. 12 is a diagram showing a part of a script file used in an embodiment of the present invention;
FIG. 13 is a diagram showing a soft keyboard by means of the touch panel for inputting characters on a display B4;
FIG. 14 is a diagram showing an example of a message window displayed on the display B4;
FIG. 15 is a diagram showing a display example of functions, setup item names and whether or not there is a pause (a check is displayed only in the case where there is one) set up in a list display portion 308 of the customization screen by a CPU (A1) in order to display details of registered scripts according to this embodiment;
FIG. 16 is a flowchart for describing an operation during the reproducing mode according to an embodiment of the present invention;
FIG. 17 is a diagram showing an example of the screen for calling the script file to be registered according to a third embodiment;
FIG. 18 is a diagram showing an example of the screen for representing a progress status of the scripts according to the third embodiment;
FIG. 19 is a diagram showing the screen displaying scripts not implementable following an implemented pause script as shaded areas according to the third embodiment.

### DETAILED DESCRIPTION OF THE PREFERRED EMBODIMENTS

Hereunder, a description will be given by referring to the drawings as to details of a control action of a user operation of an image processing apparatus according to an embodiment of the present invention.

### [First Embodiment]

As for this embodiment, a description will be given first as to an embodiment of recording, confirmation and reproduction processes of the user operations of the image processing apparatus.

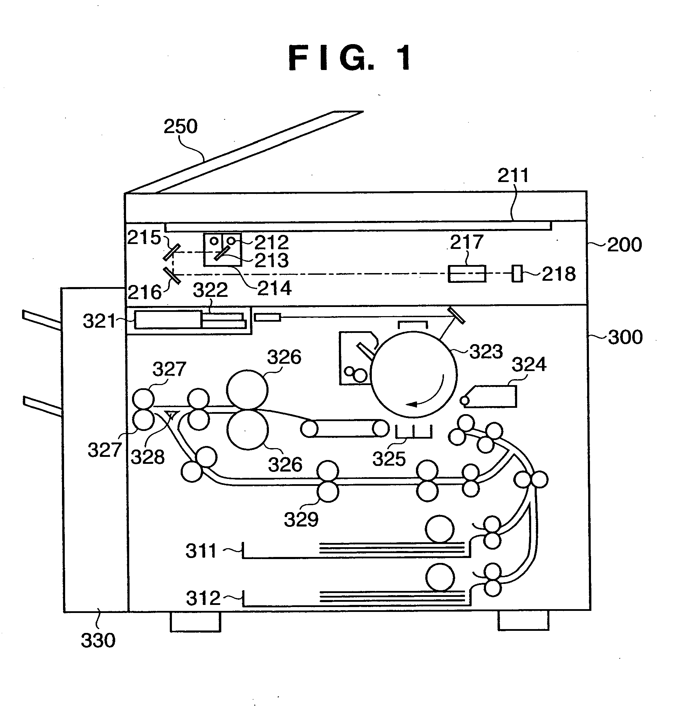

FIG. 1 is a diagram schematically showing a hardware configuration of the image processing apparatus (copying machine) according to a first embodiment of the present invention. FIG. 1 shows an example of a copying machine having a reader unit 200 for implementing a scan function and a printer unit 300 for implementing a print function integrally configured therein, which is the same in other forms.

The reader unit 200 has a copy feeding unit 250 mounted thereon. The copy feeding unit 250 feeds the copies sheet by sheet in order from a first one onto a platen glass 211. Each time a reading operation of a copy is finished, the supplied copy is ejected from the platen glass 211 to a catch tray.

On having the copies fed onto the platen glass 211, the reader unit 200 lights a lamp 212 and starts moving a movement unit 213. A reading scan of the copies on the platen glass 211 is performed by the movement of the movement unit 213. During the reading scan, reflected light from the copy is led to a CCD image sensor (hereafter, referred to as "CCD") 218 by way of mirrors 214, 215, 216 and a lens 217 so that an image on the copy is focused onto an imaging area of the CCD 218. The CCD 218 converts the image focused on the imaging area to an electrical signal. And the electrical signal is inputted to a control unit 100 for controlling the copying machine after having a predetermined process performed.

The printer unit 300 has a laser driver 321. The laser driver 321 drives a laser emitting unit 322 based on image data inputted from the control unit 100. Thus, a laser beam according to the image data is emitted from the laser emitting unit 322. The laser beam is irradiated on a photosensitive drum 323 while being scanned.

The photosensitive drum 323 has an electrostatic latent image formed thereon by the irradiated laser beam. This electrostatic latent image is rendered as a visible image as a toner image by a toner supplied from a development device 324. In synchronization with irradiation timing of the laser beam, recording paper is fed between the photosensitive drum 323 and a transfer unit 325 from cassettes 311, 312 via a paper path. And a toner image on the photosensitive drum 323 is transferred onto the recording paper fed by the transfer unit 325.

The recording paper having the toner image transferred thereon is sent to a pair of fixing rollers (a heating roller and a pressure roller) 326 via a carrier belt. The pair of fixing rollers 326 thermally pressurizes the recording paper so as to fix the toner image on the recording paper thereon. The recording paper having passed the pair of fixing rollers 326 is ejected to an ejection unit 330 by a pair of ejection rollers 327. The ejection unit 330 is configured by a sheet processor capable of performing post-processing such as a sort and a staple.

In the case where a double-sided printing mode is set, the recording paper is fed to the pair of ejection rollers 327, and then a rotation direction of the pair of ejection rollers 327 is reversed to have the recording paper led to a refeeding path 329 by a flapper 328. The recording paper led to the refeeding path 329 is refed between the photosensitive drum 323 and a transfer unit 325 in the above-mentioned timing so as to have the toner image transferred on a backside of the recording paper.

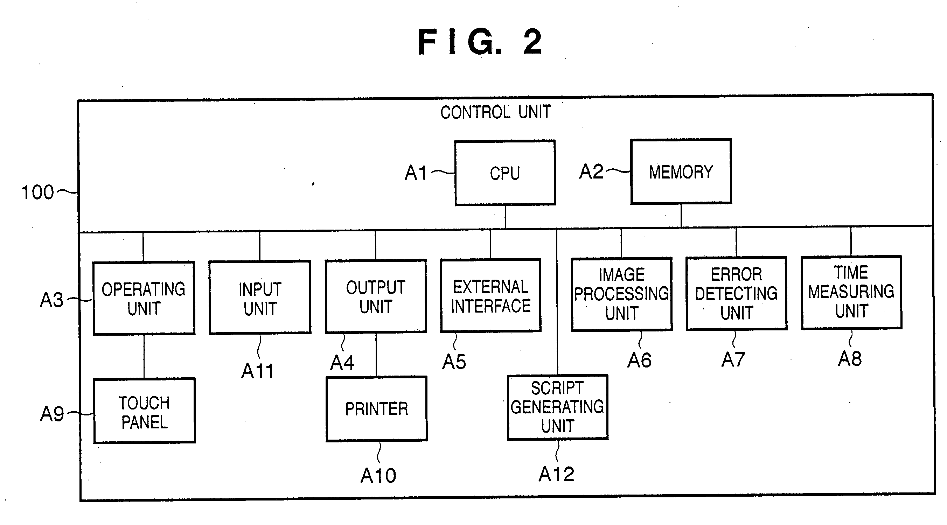

FIG. 2 is a block diagram showing a detail configuration of the control unit 100 of the image processing apparatus (copying machine) according to the first embodiment shown in FIG. 1. The control unit 100 of the image processing apparatus comprises an operating unit A3 having a touch panel A9, an output unit A4 for outputting information with a printer A10 and so on, an input unit A11 for inputting information on user operations and so on, an external interface A5 for exchanging the information with an external apparatus by using a network cable and so on, an image processing unit A6 for processing a read image, a script generating unit A12 for generating a script representing the user operations, a memory A2 for saving (storing) the information, a CPU (A1) for determining various inputs and exerting predetermined control, an error detecting unit A7 for detecting an error and a time measuring unit A8 for functioning as a timer for measuring time.

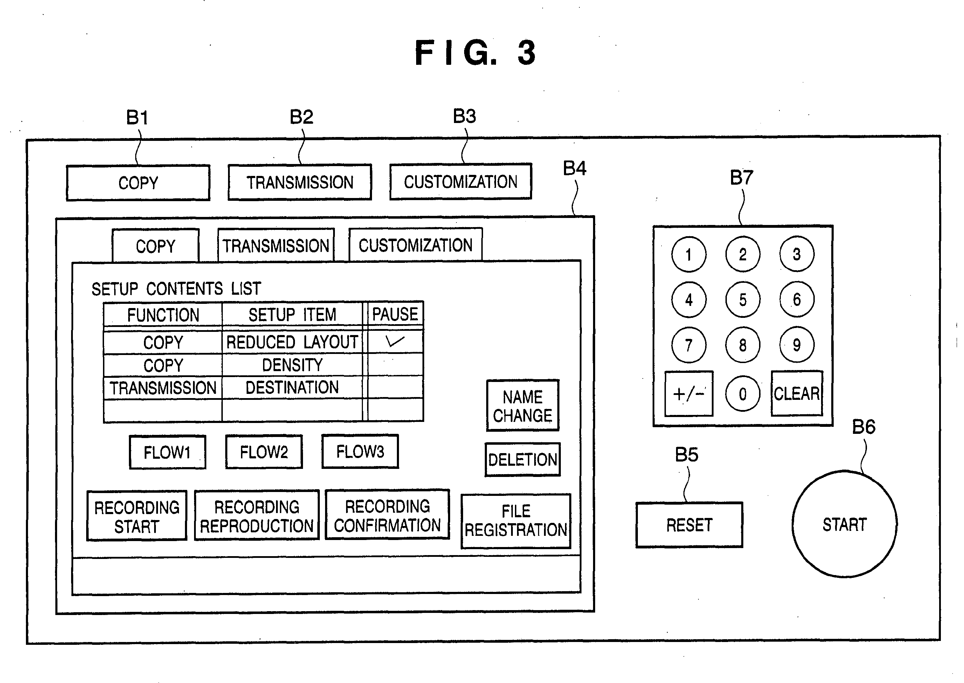

FIG. 3 is an appearance diagram of an operating unit A3 shown in FIG. 2 of the image processing apparatus according to the first embodiment of the present invention. As shown in FIG. 3, the operating unit A3 of the copying machine according to the first embodiment is configured by a display B4 as a touch panel and hard key areas B1 to B3, B5 to B7.

The display B4 comprises the touch panel A9 for inputting contents corresponding to the respective keys by pushing various keys displayed on the screen. Hereunder, the touch panel A9 having the information displayed thereon is referred to as the "screen", and different screen names are given to the screens of which information is different. According to this embodiment, the "screen" has each of the aforementioned keys displayed thereon so as to select setup contents, switch the screen, input characters, input numerical values and clear the inputs.

It also comprises various keys as the hard key areas B1 to B3, B5 to B7, such as a "copy" key B1 for switching to a copy screen for performing a copy setup (setup on copying), a "transmission" key B2 for switching to a transmission screen for performing a transmission setup of the information, a "customization" key B3 for switching to a customization screen for registering and using a key push flow (a series of steps) performed by the user, a "reset" key B5 for clearing the setup, a "start" key B6 for implementing the setup contents, and a "ten" key B7 for inputting numerical values and +/- and clearing the numerical values.

To set up the user operations easily on the above-mentioned image processing apparatus (copying machine), this embodiment uses the following method.
(1) An operation performed by the user (a key input on the touch panel, for instance) is converted to a script language by the script generating unit A12, and is temporarily stored in the memory A2. On finishing the user operation, a series of operations (user operational flow) in the memory A2 are entirely registered with a file (script file).
(2) On reproduction, the file registered in (1) is called and the contents thereof are implemented as-is or modified and implemented so as to implement a desired user operation.

It is also possible, without actually performing the key input as in the process of (1), to use the script language or script file having the script language described therein generated by another image processing apparatus or an external apparatus such as a PC.

The user operation registered in (1) is performed on the touch panel A9 provided to the operating unit A3. To be more specific, this touch operation by the user is detected by the CPU (A1), the detected contents are determined by the CPU (A1), and a process according to the contents is reflected on the image processing apparatus (copying machine) by the CPU (A1).

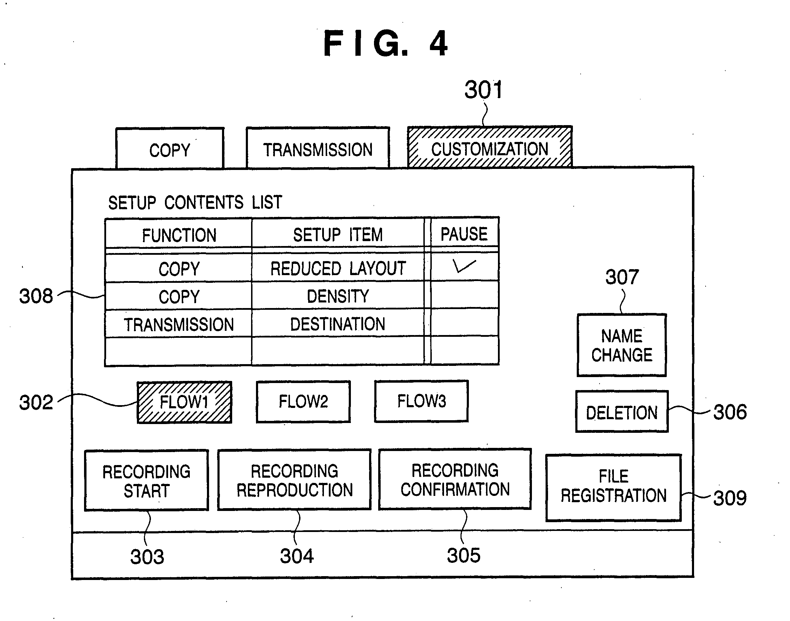

Next, a description will be given as to the four modes used on the image processing apparatus (copying machine) according to this embodiment. FIG. 4 is a diagram showing an example of the customization screen displayed on the touch panel A9 of the copying machine according to the first embodiment. The customization screen shown in FIG. 4 is displayed on the display B4 by selecting (pushing) the "customization" key B3 of the operating unit A3. The customization screen which is switched first by pushing the key is called a default screen of a customization function.

Here, as shown in FIG. 4, a customization tab 301 is constantly highlighted on the customization screen, which indicates that a current screen is the screen of the customization function. Each tab in the case of copying and transmission is highlighted likewise on each of the screens. It is also possible, by pushing the customization tab 301 on the screen other than that of the customization function (the screen of a copy function or a transmission function for instance), to switch to the default screen of the customization screen as in the case of pushing the "customization" key B3 of the operating unit A3. For this reason, there are the cases where the customization tab 301 is called a "customization" key 301. In the diagrams described hereunder, there are highlighted keys other than the aforementioned tabs (301 and 302 for instance). They represent the pushed keys unless specified otherwise.

A first mode of the four modes is a "recording mode." This is the mode for recording the user operations. To be more precise, the user operations are represented in the script language (that is, rendered as a script) and recorded in the memory A2 repeatedly. On finishing the recording, the description in the script language in the memory A2 (also referred to as a "script" for short) is collectively registered with one file, and this file is stored in the memory A2 again. To move on to this mode, the "customization" key B3 of the display B4 is pushed to switch to the customization screen, and a "recording start" key 303 is pushed after having the customization screen displayed on the display B4.

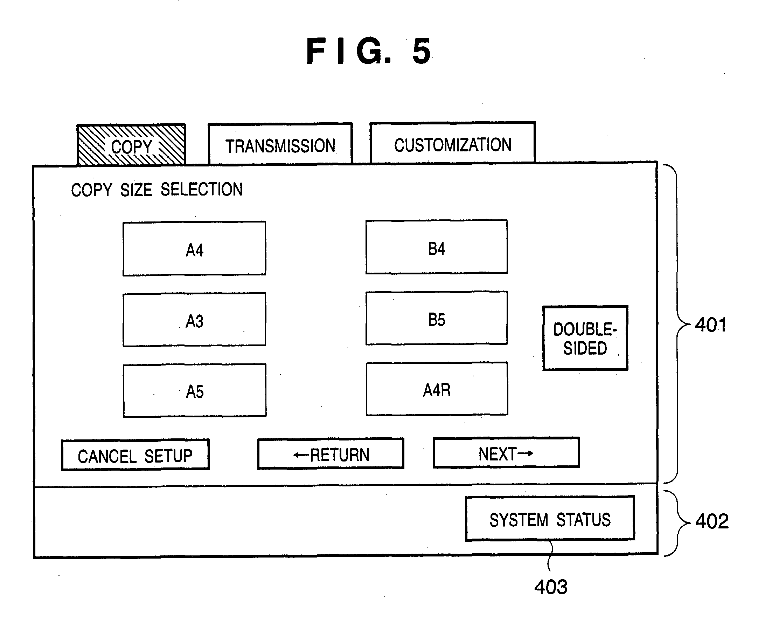

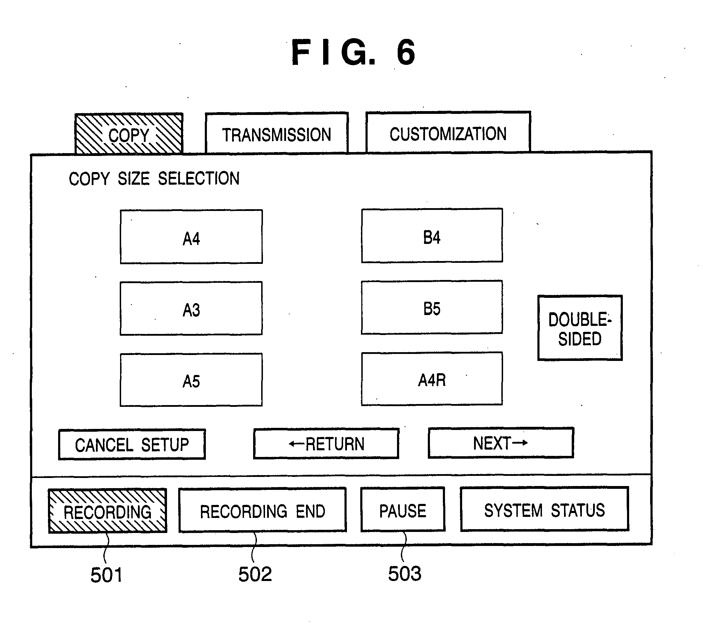

Here, a description will be given as to the screens displayed during the recording mode. FIG. 5 is a diagram for describing a setup area and a status area on the screen displayed during the recording mode according to the first embodiment. FIG. 6 is a diagram showing an example of a screen display during the recording mode according to the first embodiment.

The screen normally displayed on setting up the copy function or the transmission function is divided into a setup area 401 and a status area 402 as shown in FIG. 5. As shown in FIG. 5, the status area 402 has only a "system status" key 403 for indicating an apparatus status of the image processing apparatus (copying machine) displayed therein. As shown in FIG. 6, however, there are three keys displayed during the recording mode other than the "system status" key 403, which are a "recording" key 501 indicating that it is just being recorded in the status area 402, a "recording end" key 502 indicating an end of recording and a "pause" key 503 indicating insertion of a pause. Only the "recording" key 501 is constantly highlighted, and there is no change on the screen even if the user pushes the key. It is possible to get out of the recording mode by pushing the "recording end" key 502.

A second mode of the four modes is a "reproducing mode." This is the mode for reproducing a registered operation. To be more precise, the user operation recorded in a script language format is called from the memory A2, and this operation is interpreted by the CPU (A1) to be set up on the image processing apparatus (copying machine).

To move on to the reproducing mode, a "flow key" corresponding to the script file to be called (a "flow 1" key 302 of which key name is a default in FIG. 4 for instance) is pushed and a "record/reproducing" key 304 is pushed on the customization screen.

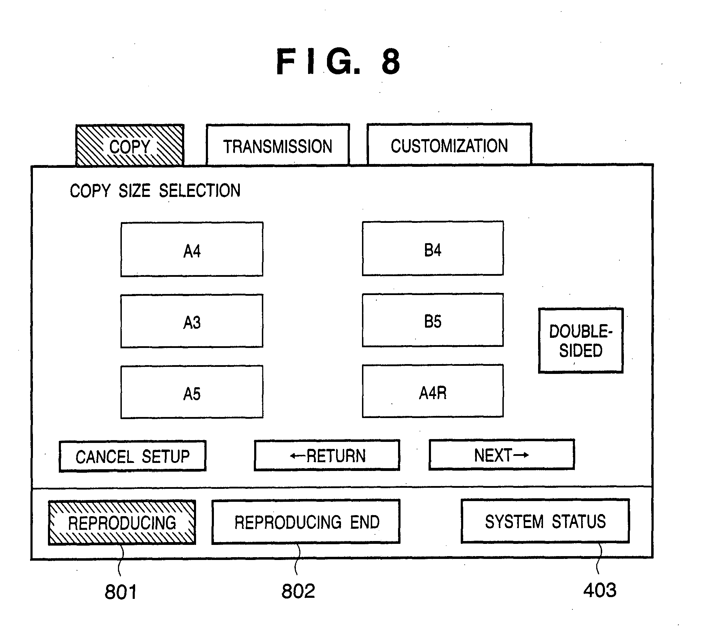

FIG. 8 is a diagram showing an example of the screen display during the reproducing mode of the copying machine according to the first embodiment. As shown in FIG. 5, the status area 402 of the normal screen has only the "system status" key 403 displayed therein. During the reproducing mode, however, the status area 402 has a "reproducing" key 801 indicating that it is just being reproduced and a "reproducing end" key 802 for ending and getting out of the reproducing mode constantly displayed therein. Only the "reproducing" key 801 is constantly highlighted, and there is no change even if pushed. It is possible to get out of the reproducing mode by pushing the "reproducing end" key 802. The screen switch by the reproduction in the reproducing mode is displayed on the display B4.

A third mode of the four modes is a "pause mode." This is the mode for inserting an unrecorded operation between the user operations in a series of user operational flows. To be more precise, if the CPU (A1) detects that the script implemented by the series of user operational flows in the reproducing mode is a pause script, it makes a determination by detecting the user's key pushing operation without implementing the script of the next user operational flow until the pause is released.

In the case where the CPU (A1) determines that the user's key pushing operation is other than the pause release, it repeats the implementation. It is thereby possible to modify a recorded setup. To move on to the pause mode, a pause script meaning a pause is implemented during the reproducing mode.

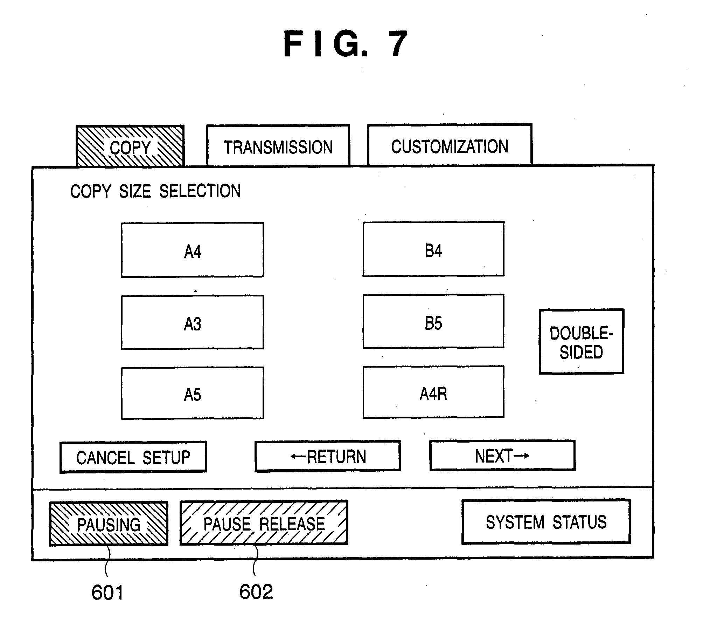

FIG. 7 is a diagram showing an example of the screen display during the pause mode according to the first embodiment. As shown in FIG. 5, the status area 402 of the normal screen has only the "system status" key 403 displayed therein. However, the status area 402 in the pause mode has a "pausing" key 601 indicating that it is just pausing and a "pause release" key 602 for releasing the pause and getting out of the pause mode constantly displayed therein. Only the "pausing" key 601 is constantly highlighted, and there is no change even if pushed. It is possible to get out of the pause mode by pushing the "pause release" key 602.

A fourth mode of the four modes is a "confirmation mode." This is the mode for implementing the user operations of the registered user operational flows sequentially to confirm operation contents. To be more precise, the CPU (A1) determines whether or not to implement the user operations of the user operational flows registered with the memory A2 so as to perform the implementation or implementation issuing no job in reality. Here, the implementation issuing no job means performing only a copy operation on a system setup without actually ejecting a copied sheet in the case of the copy operation for instance. According to this embodiment, it is thereby displayed that a copy has been made as print history.

To move on to this mode, the key corresponding to the script file to be called (the "flow 1" key for instance) is pushed and a "record confirmation" key 305 is pushed on the customization screen.

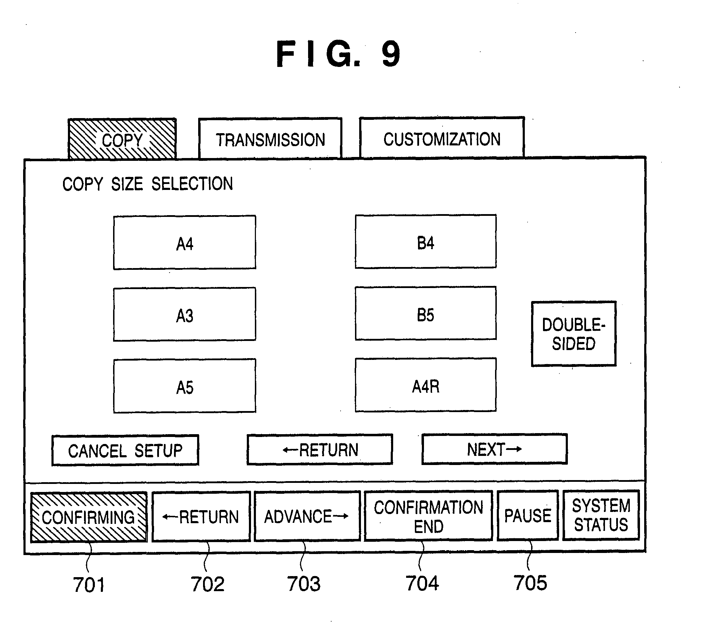

FIG. 9 is a diagram showing an example of the screen display during the confirmation mode of the copying machine according to the first embodiment. As shown in FIG. 5, the status area 402 of the normal screen has only the "system status" key 403 displayed therein. As shown in FIG. 9, however, there are the keys constantly displayed during the confirmation mode, which are a "confirming" key 701 indicating that it is just in the confirmation mode, an "advance" key 703 for moving on to the screen display by the next operation, a "return" key 702 for returning to the screen display by the previous operation, a "confirmation end" key 704 for ending the confirmation and a "pause" key 705 indicating the pause.

The "pause" key 705 is highlighted during the implementation of the pause script, and there is no change while highlighted even if the key is pushed again. If pushed when not highlighted, however, the pause script is inserted into the original file highlighted and confirmed. The "return" key 702 is shaded and not selectable for instance on the screen for setting up a first operation registered. Likewise, the "advance" key 703 on the screen for setting up the last operation registered is shaded so as not to be pushed. During the confirmation mode, the "confirming" key 701 is constantly highlighted, and there is no change even if it is pushed.

In the case where the "advance" key 703 is pushed on the screen shown in FIG. 9, the CPU (A1) calls and starts the implementation of the script file corresponding to the key pushed before entering the confirmation mode from the memory A2. In the case where the called script is the pause script, however, merely the pause key is pushed to be highlighted instead of moving on to the pause mode as with the reproducing mode.

All of the user operations called by the CPU (A1) and the pause scripts newly inserted during the confirmation mode are recorded in the memory A2. The information of the memory A2 is overwritten as a file called from the memory A2 immediately after entering the confirmation mode when getting out of the confirmation mode. Thus, even in the case where the script is added during the confirmation mode, it can be re-created when reproduced next. A concrete example of inserting the pause script during the confirmation mode will be described later. It is possible to get out of this mode by pushing the "confirmation end" key 704.

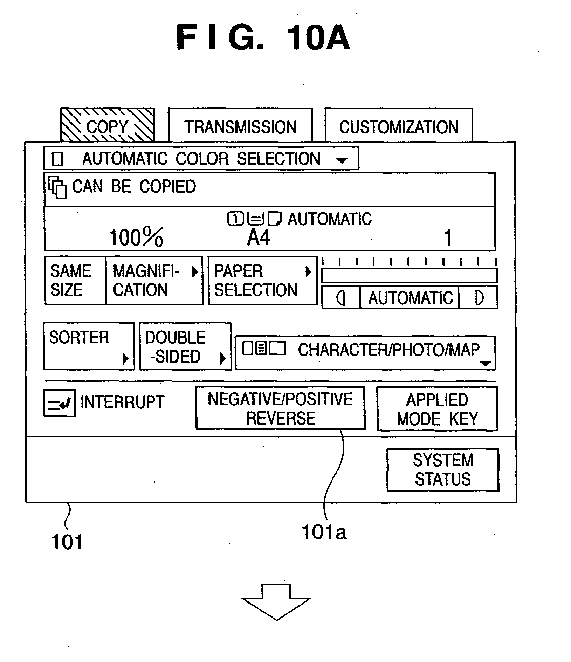

Next, a description will be given as to an example of recording the user operation, confirming the recorded contents, calling the recorded contents and reproducing them as-is or correcting a part of the recorded contents by using an example of setting up a reduced layout of "x in 1" (to be more specific, for example, a function of reducing size of x sheets of an A4 document to be placed in one sheet of A4 paper and printing it) on copying a document by using the image processing apparatus (copying machine) having the configuration shown in FIG. 2. To register a reduced layout function of "x in 1," it is recorded and reproduced in a setup of "4 in 1" in which x is 4, and then a pause is given and a value of x is selected. FIGS. 10A to 10F are diagrams for describing a screen flow for setting up "4 in 1."

First, a description will be given as to the procedure before entering the recording mode.

On the screen of FIG. 4, the customization key 301 is pushed first to switch to the customization screen shown in FIG. 5. And the key for registering the user operational flow is pushed and highlighted. Here, the key 302 of the key name "flow 1" is pushed. Next, the "recording start" key 303 is pushed. Thus, it is automatically put in the same state as having the "reset" key B5 pushed (that is, the state of resetting all the setups and switching to the default screen) so as to enter the recording mode. Here, the default screen is a copy initial screen. The copy initial screen is the screen first switched to on pushing the "copy" key B1, which is the same hereunder.

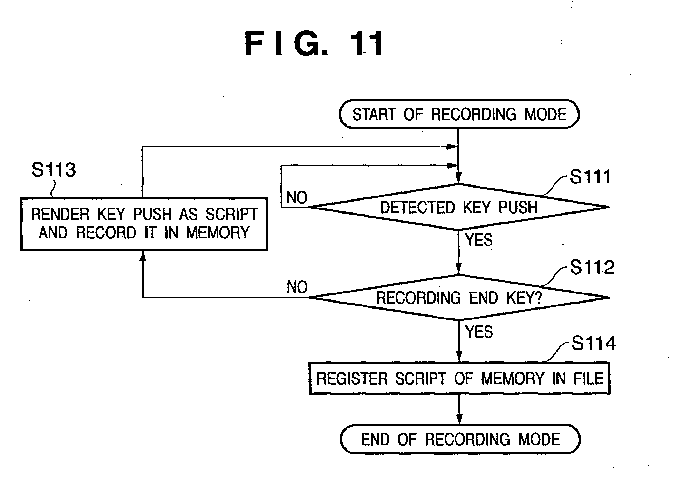

Next, a description will be given as to registration of the operational flow during the recording mode. FIG. 11 is a flowchart for describing the procedure for registering the operational flow according to the first embodiment. The user first pushes the key on the screen to have the screen switch. This operation is determined by detecting the user's key push by the CPU (A1) (step S111). To be more specific, in the case where the CPU (A1) detects a key push (Yes), it determines next whether or not the key push is that of the "recording end" key (step S112).

Consequently, in the case where the detected key push is not that of the "recording end" key (No), the key push is converted to the script language (rendered as the script) of equivalent meaning to having pushed the key so as to record the script language (script) in the memory A2 (step S113). And the operation is repeated until the "recording end" key is pushed.

In the case where the detected key push is that of the "recording end" key (Yes), the key pushes so far (except the last "recording end" key) are registered with the file (step S114) so as to finish the recording mode. This file and a flow name key (such as the aforementioned "flow 1") selected before entering the recording mode are associated by the CPU (A1) and stored in the memory A2.

As for the process of rendering the key push as the script in the step S113, it is also possible, other than a method of scripting it at each key push of the user as in FIG. 11, to store key push information of the user until the end of the recording and script it collectively after the end of the recording.

In the example of the reduced layout shown in FIG. 10A, an "applied mode" key 101a existing on a copy initial screen 101 is pushed, a "reduced layout" key 102a is pushed, an "A4" key 103a is pushed as a copy size, and a "next" key 103b is pushed to switch to a "type selection" screen 104. Next, a "4 in 1" key 104a is pushed here in order to set up "x in 1."

Here, to correct it to "2 in 1" or "8 in 1" when in the reproducing mode, the "pause" key 503 of the status area 402 is pushed. The push of the "pause" key 503 is rendered as the script and recorded as with a normal key push. On reproduction, however, it is not reproduced as a key input, but the implementation of the script file is stopped and an operation for accepting the user's key push is implemented until the "pause release" key 602 is pushed. The key push is not re-created.

After pushing the "pause" key 503, a "next" key 104b is pushed, an "A4" key 105a is pushed, and an "OK" key 105b is pushed. And lastly, the "recording end" key 502 of the status area 402 is pushed, and the script recorded in the memory A2 is registered with the file associated with the "flow 1" key 302 pushed before entering the recording mode (this file is also stored in the memory A2) so as to get out of the recording mode. The recording operation is performed as above.

As described above, there is an advantage that, by actually pushing the keys, there is no longer the case of rendering a non-settable key push as the script. Here, the scripting will be described in detail.

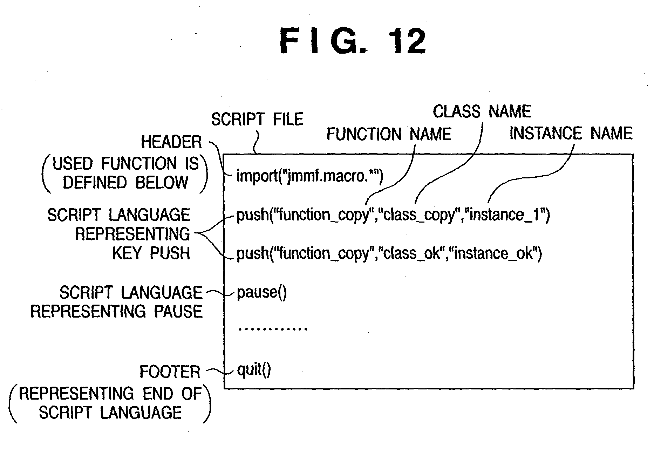

According to this embodiment, the pushed keys are converted to the script language as described above. It is necessary, however, to be able to uniquely identify the pushed key on conversion. FIG. 12 is a diagram showing a part of the script file used in an embodiment of the present invention. As shown in FIG. 12 for instance, this embodiment uses the script file which uniquely identifies the pushed key by using Pnuts as the script language and passing a function name, a class name and an instance name as arguments to a function push meaning the key push (jmmf.macro.*). As for the arguments, the function name represents a function name such as copying or customization, the class name represents a screen name such as a standard screen or a selection screen, and the instance name represents keys such as "OK" or a numerical value "1." A function pause representing a pause script in the script file also has jmmf.macro.* as the argument.

As for internal control of the method of rendering the key push as the script, the information on the above-mentioned configuration (a function name, a class name and an instance name) corresponding to each of the keys is stored in the memory A2, and configuration information corresponding to the key push is called from the memory A2 when the CPU (A1) detects the key push so as to represent a specific key push in the script language by using this information. In the case of the pause script, the configuration information is checked each time the memory A2 calls it. If determined by the CPU (A1) that it is the pause script, the pause script is represented in a particular script language. In FIG. 12, the function name, class name and instance name are omitted and indicated as pause ().

A header in this script file is automatically generated by the CPU (A1) immediately after a start of the recording mode, and a footer is automatically generated immediately on an end of the recording mode. In the file for registering the user operations recorded so far, the footer is automatically described at the beginning of the file and the header at the end of the file. The user operations are recorded as described above.

Next, a description will be given as to the procedure for changing the names of the registered operational flows displayed on the customization screen.

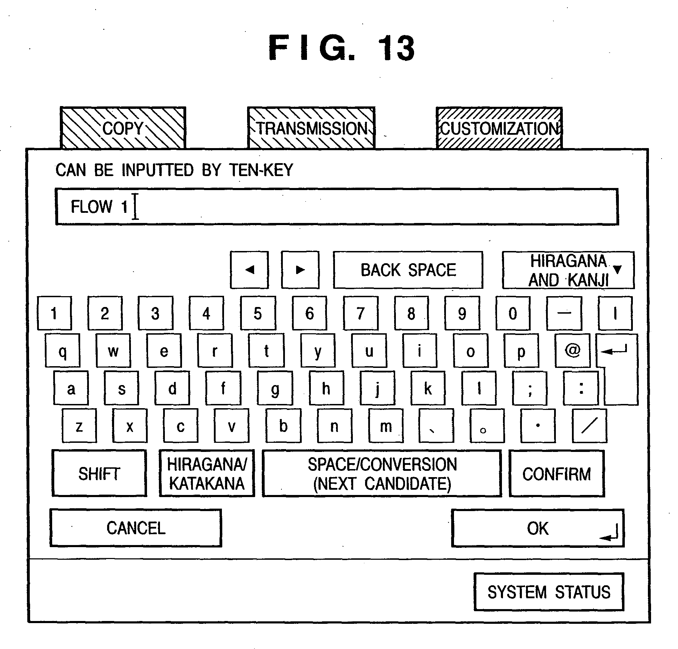

First, it is switched to the customization screen, and the key corresponding to the operational flow of which name should be changed is pushed. Here, the key 302 of the key name "flow 1" is pushed. Next, a "name change" key 307 is pushed to switch to a soft keyboard screen. FIG. 13 is a diagram showing a soft keyboard by means of the touch panel for inputting characters on the display B4. The name to be changed is inputted and an "OK" key 131 is pushed by using the screen shown in FIG. 13 so as to switch to the customization screen having the name changed thereon. The name is changed to "x in 1" in this embodiment.

The registered operational flow is not deleted in this embodiment. In the case of deleting it, however, it can be deleted by using the following procedure.

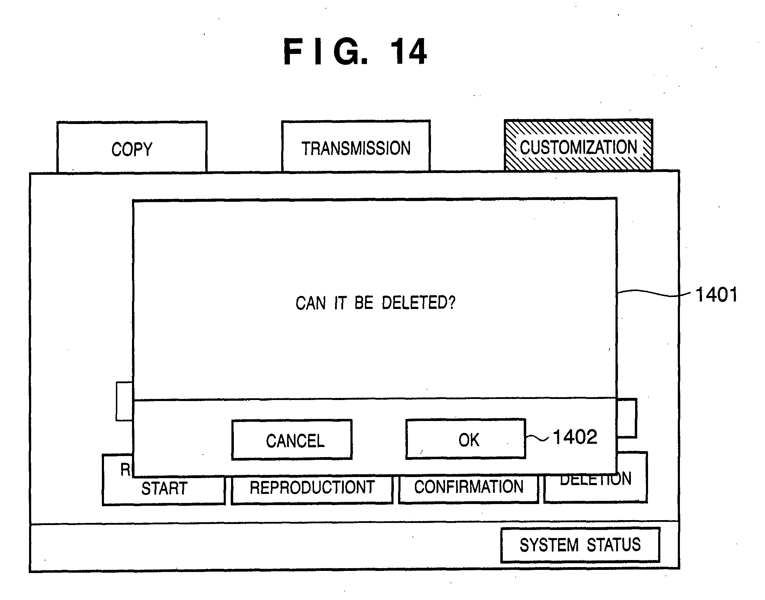

First, it is switched to the customization screen, and the key corresponding to the operational flow to be deleted is selected to push a deletion key 306. A message window 1401 having a sentence stating "Can it be deleted?" and "cancel" and "OK" keys is displayed as shown in FIG. 14. FIG. 14 is a diagram showing an example of the message window displayed on the display B4.

Here, deletion is performed by pushing an "OK" key 1402 so as to switch to the customization screen. However, the keys themselves of the customization screen are not deleted but their contents and names are initialized. In the case of not deleting them, a cancel key 1403 is pushed to switch to the customization screen. In this case, the contents and names of the keys are not changed. Thus, the names of the keys corresponding to the registered user operations are changed, and the registered user operations are deleted.

Next, the method of confirming the registered contents will be described.

First, it is switched to the customization screen of FIG. 4, and the "flow 1" key 302 (the key corresponding to the operation of "x in 1" in this embodiment) having the operational flow to be confirmed recorded thereon is pushed. Thus, the CPU (A1) calls the script file corresponding to the "flow 1" key 302, and searches for the corresponding function name and setup item name stored in the memory A2 from the function names and class names of the scripts representing the user operations. In the case where the corresponding function name and setup item name are detected, they are displayed in a setup contents list 308 of the display B4.

In the case where the same function name and setup item name continue, only the first ones are displayed. Here, the setup of "x in 1" is entirely stored in the memory A2 as a reduced layout item of the copy function. In the case where there is the pause script in the flow for setting up a certain function of the file representing this flow, a check is displayed in a pause column of a displayed list. This check of the pause script is displayed even if there is only one to a certain setup item. In the case where there is the pause script in different setup item names, the pause column of a preceding setup item name should be checked.

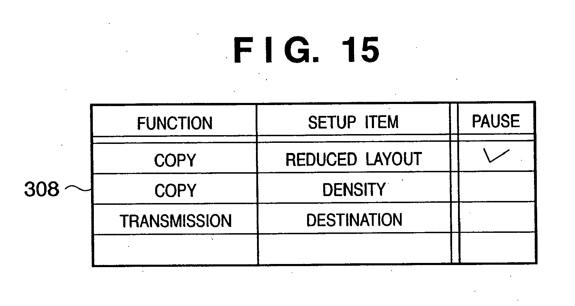

FIG. 15 is a diagram showing a display example of the functions, setup item names and whether or not there is a pause (a check is displayed only in the case where there is one) set up in the list display portion 308 of the customization screen by the CPU (A1) in order to display details of the registered scripts according to this embodiment.

Next, a description will be given as to the case of confirming a registered operation by implementing it step by step. First, the "record confirmation" key 305 is pushed in the state of having selected the "flow 1" key 302 (the key corresponding to the operation of "x in 1" in this embodiment) to be confirmed. It thereby enters the confirmation mode.

On entering the confirmation mode, the CPU (A1) automatically calls the user operational flow corresponding to the "flow 1" key 302 from the memory A2 so as to implement only the script corresponding to the first key push in the user operational flow. A result of this implementation is displayed on the screen and also stored in the memory A2. It is determined, however, whether or not the operation called by the CPU (A1) actually issues a job so that, without implementing the operation for actually issuing the job, only the result in the case of having it implemented by the CPU (A1) is reflected.

For instance, in the case of a job for actually performing the copy operation or a job for actually transmitting scanned data, only the result of transmission is reflected without actually implementing it. Such a determination is implemented by saving the user operation for actually issuing the job in the memory A2 in advance and determining each time whether or not the operation called by the CPU (A1) is the user operation for issuing the job stored in the memory A2.

The script corresponding to the key push following the user operation thus implemented waits without being implemented until there is an input such as a push of the "advance" key or a push of the "return" key. In the case of the "advance" key, the user operation following a wait state is implemented. In the case of the "return" key, however, the screen display returns to the status before implementing the script representing the operation implemented latest. To be more specific, the CPU (A1) calls the result of the operation implemented latest from the memory A2. The registered user operation is confirmed as above.

Lastly, a description will be given as to the procedure for reproducing the registered operational flows.

First, it is switched to the customization screen of FIG. 4, and the key corresponding to the user operational flow to be reproduced (the "flow 1" key 302 corresponding to "x in 1" in this embodiment) is pushed. And then the "record reproducing" key 304 is pushed. Thus, it is automatically put in the same state as the case of having the "reset" key B5 pushed (that is, the state of having the setup reset and the screen switched to the default screen) so as to enter the reproducing mode.

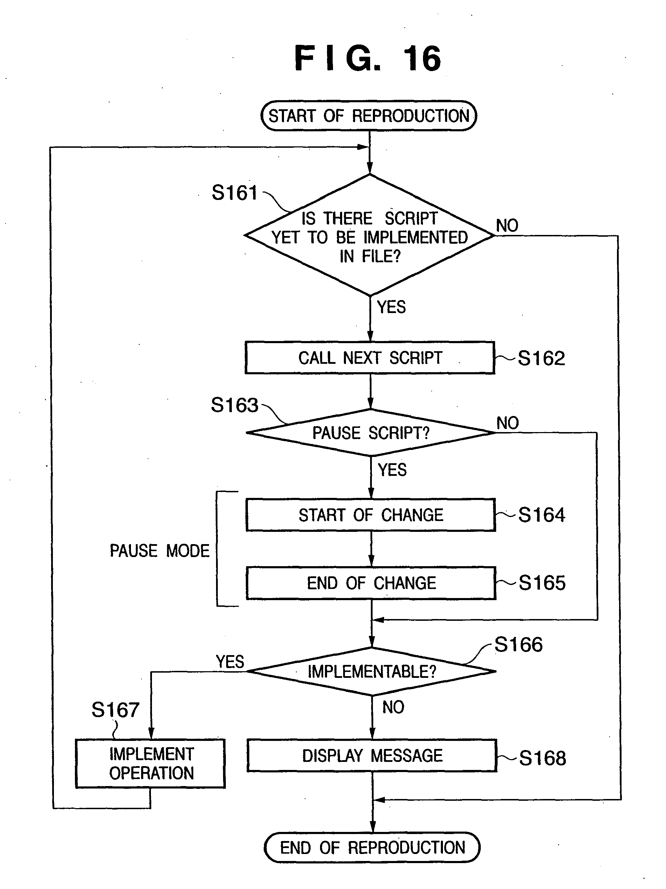

FIG. 16 is a flowchart for describing the operation during the reproducing mode according to an embodiment of the present invention. First, the CPU (A1) automatically calls the script file corresponding to the operational flow selected on the customization screen from the memory A2 so as to determine whether or not there is a script yet to be implemented sequentially from the beginning of the file (step S161). Consequently, in the case where all the scripts have been implemented (No), it gets out of the reproducing mode described in this flowchart and is finished.

In the case where there are the scripts yet to be implemented (Yes), the next script is called (step S162). As the file having the setup of "x in 1" recorded therein is called according to this embodiment, the script yet to be implemented (the script representing a push of the "applied mode" key for instance) is called.

Next, the CPU (A1) determines whether or not the called script is the pause script (step S163). Consequently, in the case where the called script is the pause script (Yes), the CPU (A1) interprets and implements the script. It thereby enters the pause mode, where the user performs the setup (that is, corrections and/or changes are started) until the "pause release" key 602 shown in FIG. 7 is pushed (step S164).

On finishing the corrections and/or changes, the "pause release" key 602 is pushed to get out of the pause mode (step S165). The internal control in this case is implemented by the control for having the operations performed during the pause mode recorded in the memory A2 by the CPU (A1), and if the "pause release" key 602 is pushed, fetching the operation recorded in the memory A2 earliest (that is, at the time close to the present) from the memory A2 and implementing it.

In the case where it is determined that the script called in the step S163 is not the pause script (No) and after finishing the changes in the step S165, it is determined whether or not the script is implementable (step S166). As this embodiment is not the pause script, it is determined next whether or not the script of the step S166 is implementable after the process of the step S163.

As described above, it is determined by the CPU (A1) whether or not the called script or the corrected script is implementable in the step S166. Consequently, in the case where the called script is not implementable, it displays a message window including sentences stating "Not implementable. Will finish by reflecting the operations so far" and the "OK" key (step S168). It is possible to get out of the reproducing mode and finish by pushing the "OK" key of the message window.

In the case where the script called in the step S166 is implementable (Yes), the operation actually called is performed by the CPU (A1) so as to display the result of the operation on the screen (step S167). And it returns to the determination of whether or not there is a script yet to be called in the file (step S161). As the push of the "applied mode" key is implementable according to this embodiment, it is implemented.

According to this embodiment, the scripts of pushing the "reduced layout" key, "A4" key, "next" key and "4 in 1" key are implemented likewise by using the above-mentioned procedure. If called from the file thereafter, the pause script is called. Thus, a "2 in 1" key is pushed here to correct the setup of "4 in 1." Furthermore, the "pause release" key 602 is pushed here so as to get out of the pause mode and determine whether or not this corrected script is implementable (step S166). Here, it is implementable because of the setup of "2 in 1," and the "next" key script, the "A4" key script and the last "OK" key script thereafter are called and implemented by using the same procedure as the above-mentioned procedure.

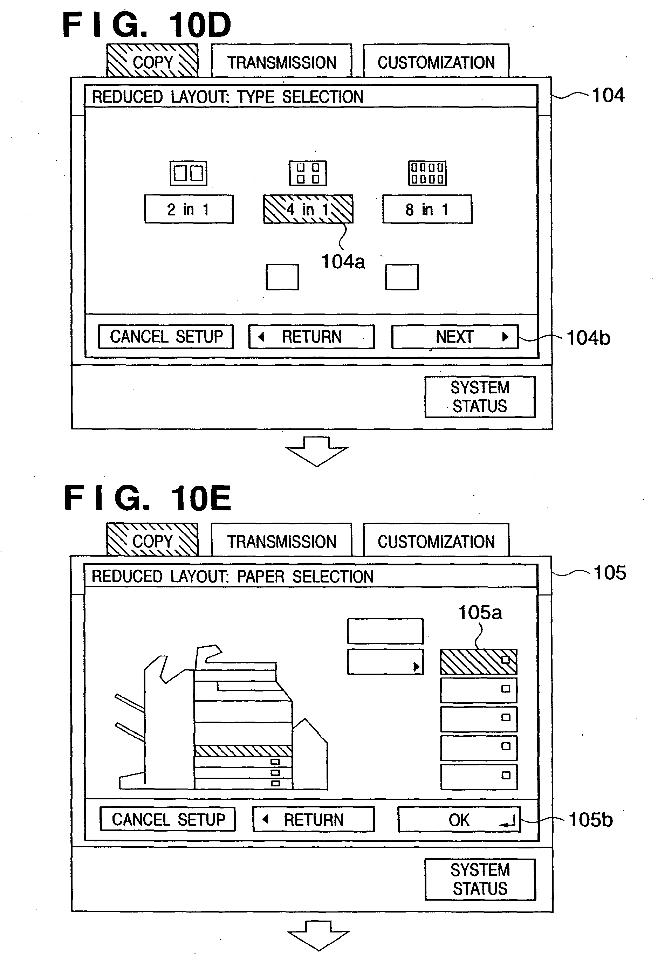

If the "return" key is pushed instead of the "2 in 1" key in the correction after the pause, the "next" key cannot be pushed as the following operation on the type selection screen 104 shown in FIG. 10D. In such a case, it is possible to display the message window and push the "OK" key there so as to get out of the reproducing mode. The procedure of reproduction is as described above.

As described above, the image processing apparatus according to this embodiment can suitably reduce the trouble (procedure) necessary for the user to perform the setup. The above-mentioned embodiment described the case where the user operational flow is automatically implemented. However, it is the same even in the case of manually implementing the user operations of the user operational flow one by one in sequence.

According to this embodiment, it is also possible, by performing the above-mentioned customization, to implement a flexible setup (setting up different contents of similarity from one registered content by using a small number of operational procedures, for instance), which was not implementable by a conventional set value calling technique or a conventional setup operation calling technique. It is also possible to create a shortcut holding the setups made until switching to that screen rather than the shortcut of a mere screen shift to a certain setup screen. To be more precise, it is possible to insert another operation after an arbitrary user operation so as to change the preceding operation.

### [Second Embodiment]

Next, a description will be given as to an embodiment of a confirmation process and a reproduction process different from the first embodiment by using the image processing apparatus (copying machine) according to a second embodiment of the present invention. Differences between this embodiment and the first embodiment are as follows. (1) It is possible, during confirmation in confirmation mode, to newly add a pause script between the scripts representing the user operations of the user operational flow. (2) The screen during reproduction displays no operational result other than that of implementation of the pause script. (3) It is possible to make a correction again in the case where a corrected operation in the pause mode allows no following operation to be implemented.

The following will describe only the units different from the first embodiment. Otherwise, it is the same as the first embodiment.

First, as with the first embodiment, the user operational flow for performing the setup of "x in 1" is registered with the key 302 of the key name "flow 1" on the customization screen shown in FIG. 4. After this, the flow key (the key 302 in this case) corresponding to the registered operational flow and the "record confirmation" key 305 are pushed to enter the confirmation mode. Thus, the first user operation is called from the script file corresponding to the flow key and implemented so as to wait for the input of the "return" key 702 or the "advance" key 703.

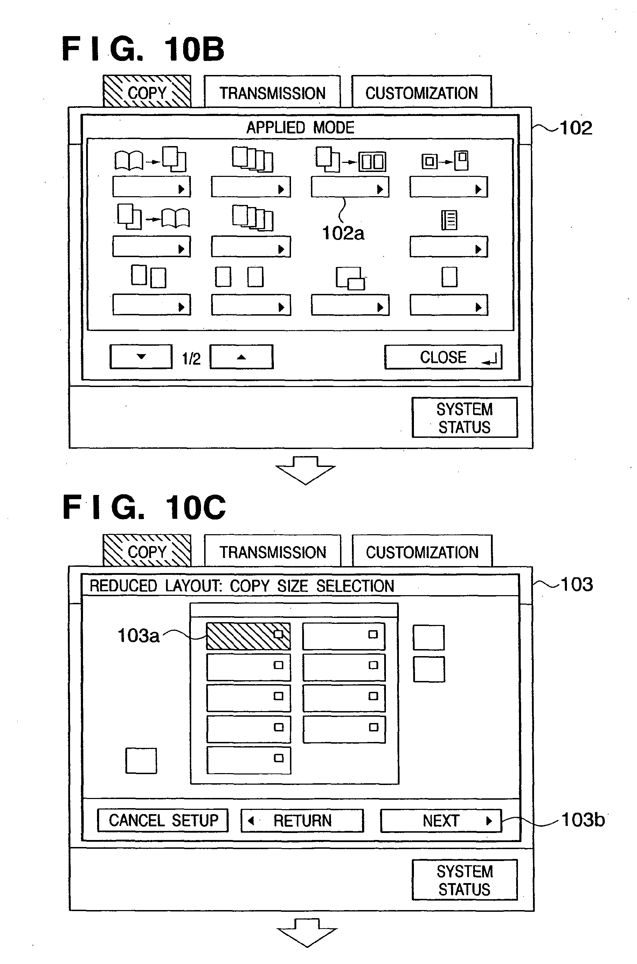

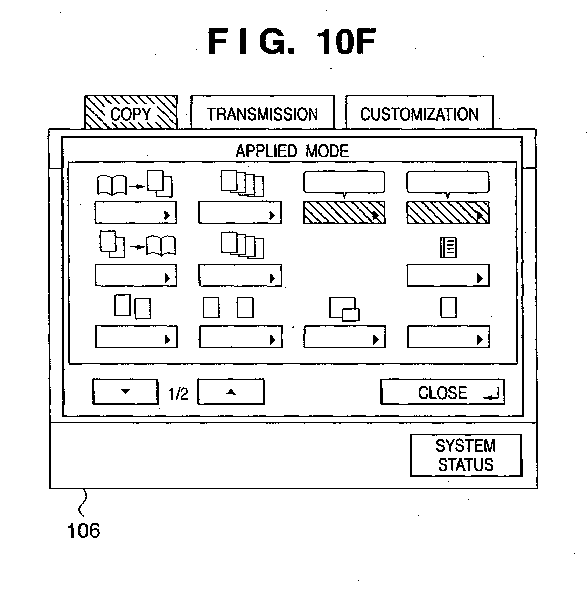

According to this embodiment, the "advance" key 703 is pushed three times to switch to the screen of the results of pushing the "applied mode" key, the "reduced layout" key and the "A4" key (that is, a screen 103 of Fig. 10 on which the "A4" key is highlighted). It is exactly the same as the aforementioned first embodiment up to here.

Here, in preparation for the case of changing the copy size from A4 on the implementation, the pause script is inserted in the confirmation mode, that is, the "pause" key 503 displayed in the status area in the confirmation mode is pushed. Thus, the pause script is recorded in the memory A2. And the same operation as the first embodiment is performed to get out of the confirmation mode.

In this case, all the operations recorded in the memory A2 are overwritten to the key representing the flow selected on the customization screen first. Thus, a new script file having the pause script added thereto is associated with the key representing the flow selected on the customization screen first. As described above, this embodiment is different from the aforementioned first embodiment in that the pause script can be added during the confirmation mode.

Next, a description will be given as to the difference from the first embodiment in the case of implementing the user operational flow of "x in 1" having the pause script newly added thereto. Here, when automatically implementing the script of the registered file in the reproducing mode, the image processing apparatus displaying nothing in the display unit B4 of the operating unit A3 is used. On this image processing apparatus, the flow key (the key 302 in this case) and the "record reproducing" key 304 on the customization screen are pushed to enter the reproducing mode. Thus, the push of the "applied mode" key, the push of the "reduced layout" key and the push of the "A4" key are automatically implemented, and the pause script inserted during the confirmation mode is subsequently implemented.

Nothing is displayed on the display B4 until the pause script is implemented. As the pause script is implemented, however, it displays the screen as a result of pushing the "A4" key (that is, the screen 103 of Fig. 10C on which the "A4" key is highlighted). Here, it is possible, as with normal implementation of the pause script, to freely add the setups until the "pause release" key 602 is pushed.

As described above, an advantage of having nothing displayed in the display portion B4 is that the user can clearly recognize the normal setup mode and reproducing mode. It is thereby possible to reduce errors caused by mistakenly pushing the touch panel during the reproducing mode and thereby implementing the operation mistakenly inputted from the touch panel while implementing the user operational flow called from the script file.

Next, a description will be given as to the method of considering, from the operation performed during the pause mode, whether or not subsequent operations are implementable in the reproducing mode. Presently, it is in the state in which, due to the aforementioned operational results, the screen as a result of pushing the "A4" key (the screen 103 of Fig. 10C on which the "A4" key is highlighted) is displayed and it is in the pause mode.

Here, the "return" key is pushed instead of the "A3" key or "B4" key, and then the "pause release" key 602 in the status area is pushed. In this case, it is not possible, due to the push of the "return" key, to push the "next" key 103b of a paper selection screen (the screen 103 of Fig. 10C) as a next operation registered with the file. For that reason, on pushing the "pause release" key 602, it displays a message window, before implementing the next operation of the file, including sentences stating "The rest is not implementable by this operation. Like to implement this operation?" and the "cancel" key and "OK" key.

If the "cancel" key is pushed here, it returns to the status immediately after implementing the pause script (the screen 103 of Fig. 10C on which the "A4" key is highlighted) so that it is possible to start the operation over. In this case, the CPU (A1) detects the push of the "pause release" key 602 and nullifies the operation performed up to the pause script implemented latest from a current position having the operation reproduced by the file written thereon.

In the case where the "OK" key is pushed instead of the "cancel" key, the operation is implemented as with the first embodiment. And the CPU (A1) detects that the next operation (that is, the push of the "next" key) is not implementable. It displays a message window including the sentences stating "Not implementable. Will finish by reflecting the operations so far" and the "OK" key so as to get out of the reproducing mode. The above is the embodiment of the confirmation method and reproduction method different from the first embodiment.

### [Third Embodiment]

Next, a description will be given as to an embodiment of a recording process and a reproduction process different from the first embodiment by using the image processing apparatus (copying machine) according to a third embodiment of the present invention. This embodiment is different from the first embodiment in that it does not register the records of the actually implemented user operations collectively with the file but performs as follows. (1) It registers the file having the user operations recorded therein, which is downloaded via a network. (2) On switching to a customization initial screen, it checks the scripts registered with the flow keys 302 and renders the keys having the scripts not implementable as non-selectable (shaded). (3) Effective key pushes are capable of implementing the operation to be performed immediately after getting out of the pause mode upon entering the pause mode (the keys incapable of implementing this are shaded). (4) The screen display in the reproducing mode other than a stop mode shows only an implementation status of the user operational flow, and does not show the screen switch by the user operation.

The following will describe only the units different from the first embodiment. The other units are the same as the first embodiment.

First, the registration of the user operation will be described.

To begin with, the file having the operational flow for setting up "x in 1" described therein such as a file name "custom_ x _in_1.pnuts" is transferred to and stored in the memory A2 of the image processing apparatus currently in use. The file "custbm_x_in_1.pnuts" is the file having the pause script existing after the script of "4 in 1" as with the first embodiment.

As for concrete methods of transferring it to the memory A2, there are the methods such as performing it via a storage medium such as a CD-ROM or a USB memory, creating a file with a text editor of a PC and ftp-transferring it by specifying an IP address of the image processing apparatus currently in use, and mounting a browser for using the Internet on the image processing apparatus and downloading the file via the Internet.

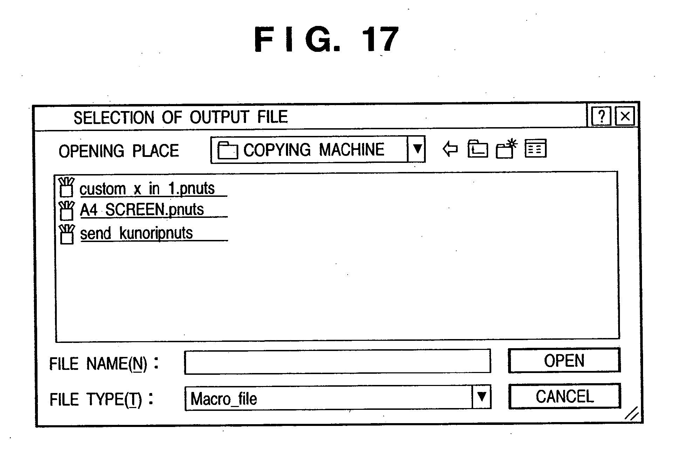

Next, the "flow 1" key 302 on the customization screen of FIG. 4 is pushed and highlighted, and a "register file" key 309 is pushed. Thus, a window screen for selecting the files registered with the memory A2 pops up. FIG. 17 is a diagram showing an example of the screen for calling the script file to be registered according to the third embodiment. Here, the file corresponding to the flow key (named the "flow 1" key 302 in this case) is selected so as to register the user operation with the flow key.

Next, a description will be given as to the operation different from the first embodiment and performed on the implementation of the reproducing mode and stop mode. First, the customization key 301 on the screen shown in FIG. 4 is pushed to switch to the customization screen. Thus, the customization screen is displayed. As is different from the first embodiment, however, it is determined immediately thereafter whether or not the scripts of the script files registered with all the flow keys existing on the screen are implementable.

If the CPU (A1) detects that the customization screen is displayed, the control for making this determination calls a list of all the scripts stored in the memory A2 in advance and available on the image processing apparatus (the image processing apparatus currently in use). And it determines whether or not all the scripts registered with the flow keys are on the list of the available scripts.

Consequently, in the case where all the scripts of the flow keys are implementable, the flow keys are displayed as with the first embodiment. In the case where a script not on the script list is registered with the flow key, the flow key is highlighted (shaded) and rendered non-selectable. For instance, if the script representing a setup of a transmission function is generated on the image processing apparatus having the transmission function, it is not possible to implement the script on the image processing apparatus having no transmission function. In such a case, the flow key is highlighted and rendered non-selectable.

While it is being determined by the CPU (A1) whether or not the scripts registered with the flow keys are implementable, it displays the message window having a sentence stating "Wait for a while" by means of pop-up so as not to accept the user's input until the determination is finished.

After finishing the determination, the flow key to be implemented (named the "flow 1" key 302 in this case) is pushed and highlighted, and the "record reproducing" key 304 is pushed to enter the reproducing mode. On entering the reproducing mode, the first script representing the user operation is implemented immediately in the first embodiment. In this operation, however, the CPU (A1) counts the number of the scripts of the script files corresponding to the name "flow 1" registered with the memory A2 before implementing the scripts. Thereafter, the scripts other than the pause script are automatically implemented as with the first embodiment.

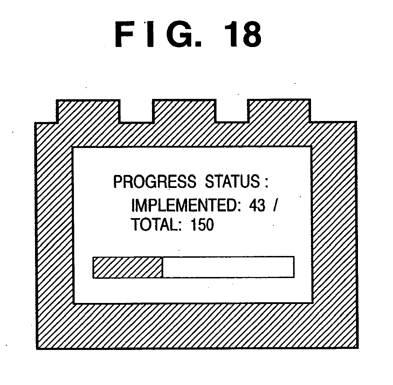

However, the display portion B4 displays the message window representing an implementation progress of the scripts by using the number of the scripts implemented so far, a progress bar and so on by pop-up on the screen displaying nothing (of the display portion B4 displaying only a black background, for instance) rather than the screen switch by implementing the scripts as in the first embodiment. FIG. 18 is a diagram showing an example of the screen for representing a progress status of the scripts according to the third embodiment. The message window is updated at a fixed time or each time a certain number of the scripts are implemented. The operations of the user are not accepted while the message window is displayed.

In the case where the pause script is implemented, the total number of the implemented scripts is stored in the memory A2, the message window is erased and the screen in the pause mode is displayed in the display portion B4. After finishing the pause mode, the display in the display portion B4 is eliminated, and the result of the progress status read from the memory A2 is displayed by pop-up.

Next, a description will be given as to an initial screen display in the pause mode different from the first embodiment. If the pause script is implemented in the reproducing mode, only the display of the status area is added and there is no change in the display of the setup area according to the first embodiment. In comparison, according to the third embodiment, it is determined whether or not the rest of the reproducing mode is implementable as to all the keys on the screen in the case of pushing the keys and getting out of the pause mode so as to exert control to shade the keys incapable of implementing the rest.

This internal control determines the current screen if the CPU (A1) detects that it has entered the pause mode. And it calls all the keys existing on the screen from the memory A2 one by one in sequence. In the case of a copy size selection screen shown in FIG. 7 for instance, selection keys of the copy sizes are called in sequence. And in the case where the keys are implemented, it is determined as to all the called keys whether or not the script following a stop script called in the reproducing mode (the "next" key push script on the copy size selection screen in this case) is implementable.

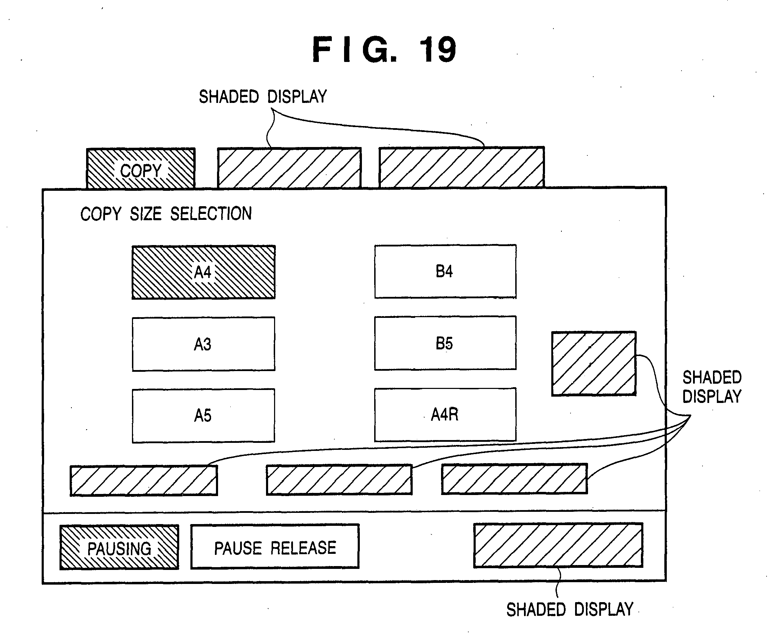

While making this determination, it displays the message window having a message stating "Wait for a while" by means of pop-up so as not to accept the operation of the user. If the determination is finished as to all the keys, it erases the message window and displays the screen on which the keys not implementable are shaded. FIG. 19 is a diagram showing the screen displaying the scripts not implementable following the implemented pause script as the shaded areas according to the third embodiment.

Furthermore, it is also possible to render the key push unacceptable to the shaded keys.

### [Fourth Embodiment]

Next, a description will be given as to an embodiment of a recording process different from the first embodiment by using the image processing apparatus (copying machine) according to a fourth embodiment of the present invention. The fourth embodiment is different from the first embodiment in that, if there is no user operation for a certain period of time during the recording mode, it automatically nullifies the user operations recorded so far and finishes the recording mode.

Hereunder, a description will be given only as to the units different from the first embodiment. The image processing apparatus according to this embodiment has a function of checking a current time on an order from the CPU (A1):

First, on the customization screen, the flow key for registering the user operational flow (named the "flow 1" key 302 in this case) is pushed and highlighted, and the "recording start" key 303 is pushed to enter the recording mode. So far, it is the same as the above-mentioned first embodiment. According to this embodiment, however, the time of entering the recording mode is stored in a measured time area of the memory A2. Thereafter, it waits for the user operation as with the first embodiment. If the user operation is detected by the CPU (A1), it renders the user operation as the script and records it in the memory A2, and also overwrites and stores the current time in the measured time area of the memory A2.

Here, while waiting for the next user operation, the CPU (A1) compares the current time to the time stored in the measured time area of the memory A2 at fixed time intervals (at 2 minutes' intervals from entering the recording mode for instance) so as to check whether or not a certain time (5 minutes for instance) has elapsed. Consequently, in the case where 5 minutes or more has elapsed for instance, it nullifies the scripts representing all the user operations from entering the recording mode recorded in the memory A2 and finishes the recording mode.

To be more precise, here is an assumed case of entering the recording mode at 10:00 AM in order to register the user operational flow of "x in 1" with the key 302 of the key name "flow 1" as with the first embodiment. Thus, 10:00 AM is stored in the measured time area of the memory A2. And the next "applied mode" key is assumedly pushed at 10:01 AM. Thus, 10:01 AM is stored in the measured time area of the memory A2.

Here, the following "reduced layout" key is not pushed. In this case, if the CPU (A1) detects that it is 10:02 AM, it compares the current time (10:02 AM) to the time (10:01 AM) in the measured time area of the memory A2 so as to check whether or not 5 minutes has elapsed. In the above example, only 1 minute has passed and so it waits for the next user operation (pushing the "reduced layout" key) while performing nothing. This is repeated until 10:06 AM when the comparison result exceeds 5 minutes so that it nullifies the script representing the push of the "applied mode" key which is the user operational flow recorded in the memory A2 so as to finish the recording mode.

### [Other Embodiments]

Note that the present invention can be applied to an apparatus comprising a single device or to system constituted by a plurality of devices.

Furthermore, the invention can be implemented by supplying a software program, which implements the functions of the foregoing embodiments, directly or indirectly to a system or apparatus, reading the supplied program code with a computer of the system or apparatus, and then executing the program code. In this case, so long as the system or apparatus has the functions of the program, the mode of implementation need not rely upon a program.

Accordingly, since the functions of the present invention are implemented by computer, the program code installed in the computer also implements the present invention. In other words, the claims of the present invention also cover a computer program for the purpose of implementing the functions of the present invention.

In this case, so long as the system or apparatus has the functions of the program, the program may be executed in any form, such as an object code, a program executed by an interpreter, or scrip data supplied to an operating system.

Example of storage media that can be used for supplying the program are a floppy disk, a hard disk, an optical disk, a magneto-optical disk, a CD-ROM, a CD-R, a CD-RW, a magnetic tape, a non-volatile type memory card, a ROM, and a DVD (DVD-ROM and a DVD-R).

As for the method of supplying the program, a client computer can be connected to a website on the Internet using a browser of the client computer, and the computer program of the present invention or an automatically-installable compressed file of the program can be downloaded to a recording medium such as a hard disk. Further, the program of the present invention can be supplied by dividing the program code constituting the program into a plurality of files and downloading the files from different websites. In other words, a WWW (World Wide Web) server that downloads, to multiple users, the program files that implement the functions of the present invention by computer is also covered by the claims of the present invention.

It is also possible to encrypt and store the program of the present invention on a storage medium such as a CD-ROM, distribute the storage medium to users, allow users who meet certain requirements to download decryption key information from a website via the Internet, and allow these users to decrypt the encrypted program by using the key information, whereby the program is installed in the user computer.

Besides the cases where the aforementioned functions according to the embodiments are implemented by executing the read program by computer, an operating system or the like running on the computer may perform all or a part of the actual processing so that the functions of the foregoing embodiments can be implemented by this processing.

Furthermore, after the program read from the storage medium is written to a function expansion board inserted into the computer or to a memory provided in a function expansion unit connected to the computer, a CPU or the like mounted on the function expansion board or function expansion unit performs all or a part of the actual processing so that the functions of the foregoing embodiments can be implemented by this processing.

According to the present invention, it is possible, when calling and reproducing recorded past user operations, to change the operations and suitably alleviate trouble of setting up the user operations for the sake of performing a desired operation.

As many apparently widely different embodiments of the present invention can be made without departing from the spirit and scope thereof, it is to be understood that the invention is not limited to the specific embodiments thereof except as defined in the claims.

## Claims

1. An image processing apparatus **characterized by** comprising:
an operating unit, adapted to accept an input by a user;
an input information recording unit, adapted to record input information inputted by the operating unit;
a stop information recording unit, adapted to record stop information while recording the input information; and
a registering unit, adapted to register an input information recorded by the input information recording unit and the stop information recorded by the stop information recording unit as operational flow information.

2. The image processing apparatus according to claim 1, **characterized by** further comprising:
a calling unit, adapted to call the operational flow information registered by the registering unit;
a reproducing unit, adapted to reproduce an operation of the operating unit according to the operational flow information called by the calling unit; and
a detecting unit, adapted to detect the stop information during reproduction of the operation by the reproducing unit, wherein:
the reproducing unit stops implementing the operation based on detection of the stop information by the detecting unit; and
the operating unit accepts the operating input by the user during the stop of implementation of the operation.

3. The image processing apparatus according to claim 2, **characterized by** further comprising:
a determining unit, adapted to determine whether or not it is possible, while the reproducing unit is stopping implementing the operation, to restart reproducing the operation based on the operational flow information after accepting the operating input by the user by means of the operating unit; and
a warning unit, adapted to give a warning to the user in the case where the determining unit determines that it is impossible to restart the operation.

4. The image processing apparatus according to claim 2, **characterized by** further comprising:
a determining unit, adapted to determine whether or not it is possible, while the reproducing unit is stopping implementing the operation, to restart reproducing the operation based on the operational flow information after accepting the operating input by the user by means of the operating unit,
wherein, in the case where the determining unit determines that it is impossible to restart the operation, the reproducing unit returns the operating input by the user during the stop of implementation of the operation to an operating state capable of starting over.

5. The image processing apparatus according to claim 1, **characterized in that** the registering unit registers information in which the input information and stop information are converted to information described as a script language as the operational flow information.

6. The image processing apparatus according to claim 1, **characterized by** further comprising:
a calling unit, adapted to call the operational flow information registered by the registering unit; and
a confirming unit, adapted to have contents of each input information included in the operational flow information called by the calling unit displayed on an operation screen to have the contents of the operational flow confirmed.

7. The image processing apparatus according to claim 6, **characterized in that** the confirming unit displays display contents displayed on the operation screen changing in conjunction with the operational flow information step by step in sequence.

8. The image processing apparatus according to claim 7, **characterized in that** the stop information recording unit records the stop information while the confirming unit is displaying the display contents displayed on the operation screen changing in conjunction with the operational flow information step by step in sequence so as to register the stop information as the operational flow information by associating it with an input information corresponding to a display state of the operation screen displayed when recording the stop information.

9. The image processing apparatus according to claim 2, **characterized in that** the reproducing unit reproduces the operation of the operating unit according to the operational flow information so as to complete an operation setup of the image processing apparatus.

10. The image processing apparatus according to claim 1, **characterized by** further comprising:
an external communication unit, adapted to communicate with another apparatus by means of an external interface to obtain the operational flow information from outside,
wherein the registering unit registers the operational flow information obtained by the external communication unit.

11. The image processing apparatus according to claim 1, **characterized in that** the recording of the input information is stopped in the case where there is no input for over predetermined time while the input information recording unit is recording the input information.

12. The image processing apparatus according to claim 1, **characterized in that**:
the operating unit has the operation screen for providing the operation screen to the user and accepting the operating input; and
the operation screen displays at a predetermined position a stop instructing button for instructing the stop information recording unit to record the stop information while the input information recording unit is recording the input information.

13. A control method of an image processing apparatus **characterized by** comprising:
an input information recording step of recording input information inputted by the operating unit, adapted to accept an input by a user;
a stop information recording step of recording stop information while recording the input information in the input information recording step; and
a registering step of registering the input information recorded in key input information recording step and the stop information recorded in the stop information recording step as operational flow information.

14. A computer program for causing a computer to implement a control method of an image processing apparatus, **characterized by** comprising:
an input information recording module for recording input information inputted by the operating unit, adapted to accept an input by a user;
a stop information recording module for recording stop information while recording the input information by the input information recording module; and
a registering module for registering a series of the key input information recorded by the key input information recording module and the temporary stop information recorded by the temporary stop information recording module as operational flow information.

15. A computer-readable recording medium **characterized in that** the computer program according to claim 14 is stored.
